# EUROPEAN PATENT APPLICATION

(11) **EP 3 422 271 A1**
(43) Date of publication of application: **02.01.2019**
(21) Application number: 18173728.9
(22) Date of filing: 23.05.2018
(51) Int. Cl.: G06Q 10/10

(54) **MAIL INFORMATION MANAGEMENT METHOD AND ASSOCIATED APPARATUS**

(30) Priority: 29.06.2017 US 201762526373 P; 07.05.2018 US 201815972252
(71) Applicant: Synology Incorporated, Taipei 103 (TW)
(72) Inventor: Lin, Yu-Feng, 103 Taipei (TW); Tsao, Ching-Shih, 103 Taipei (TW); Kao, Shi-Shiuan, 103 Taipei (TW)
(74) Representative: Lahrtz, Fritz

(57) **Abstract**

A mail information management method and associated apparatus are provided. The mail information management method may include: running a set of program modules (112) on a host server system (100), the set of program modules (112) being configured to provide a shared mailbox; receiving a request and creating the shared mailbox for predetermined members of the shared mailbox in response to the request, wherein the predetermined members includes at least one portion of a plurality of users of the host server system (100); and regarding replying to a previous mail in the shared mailbox, copying each sent mail, if any, of each member of the predetermined members into the shared mailbox, to share the each sent mail with all of the predetermined members.

## Description

### Field of the Invention

The present invention is related to mail management, and more particularly, to a mail information management method and associated apparatus such as a host server system according to the pre-characterizing clauses of claims 1 and 7.

### Background of the Invention

A mail system such as that implemented using a server may provide mail services to users of the mail system, and more particularly, may be arranged to exchange electronic mails (email or e-mail) between people using electronic devices linked to the mail system. There are some problems in the mail services of the related art. For example, regarding a topic under discussion, mails of the same topic may be sent from one person to another, and the number of recipients and the number of associated mails may increase. As a result, the loading of the mail system increases correspondingly. Thus, there is a need for a novel method and associated architecture to properly solve the existing problems without introducing unwanted side effects, or in a way that is less likely to introduce a side effect.

### Summary of the Invention

This in mind, the present invention aims at providing a mail information management method and associated apparatus such as a host server system, in order to solve the related art problems.

This is achieved by a method and associated host server system according to the pre-characterizing clauses of claims 1 and 7. The dependent claims pertain to corresponding further developments and improvements.

According to at least one embodiment of the present invention, a mail information management method is provided, where the data protection method may include: running a set of program modules on a host server system, the set of program modules being configured to provide a shared mailbox; receiving a request and creating the shared mailbox for predetermined members of the shared mailbox in response to the request, wherein the predetermined members comprises at least one portion of a plurality of users of the host server system; and regarding replying to a previous mail in the shared mailbox, copying each sent mail, if any, of each member of the predetermined members into the shared mailbox, to share the each sent mail with all of the predetermined members.

According to at least one embodiment of the present invention, a host server system is provided, where the host server system may include a network interface circuit, a storage device interface circuit, and a processing circuit that is coupled to the network interface circuit and the storage device interface circuit. The network interface circuit may be arranged to couple the host server system to at least one network, and the storage device interface circuit may be arranged to install at least one storage device for storing information. In addition, the processing circuit may be arranged to control operations of the host server system, for example, the operations may include: running a set of program modules on the host server system, the set of program modules being configured to provide a shared mailbox; receiving a request and creating the shared mailbox for predetermined members of the shared mailbox in response to the request, wherein the predetermined members comprises at least one portion of a plurality of users of the host server system; and regarding replying to a previous mail in the shared mailbox, copying each sent mail, if any, of each member of the predetermined members into the shared mailbox, to share the each sent mail with all of the predetermined members.

One of the advantages of the present invention is that the present invention can properly manage mail information to bring better user experience to users. For example, it is unnecessary that mails of the same topic are sent from one person to another within the predetermined members. In comparison with the related art, the present invention can achieve the goal of reducing mails of the same topic and reducing the associated loading, without side effects or in a way that is less likely to introduce side effects.

### Brief Description of the Drawings

In the following, the invention is further illustrated by way of example, taking reference to the accompanying drawings. Thereof
FIG. 1 is a block diagram of an apparatus for performing hybrid management on mail information according to an embodiment of the present invention, in which the apparatus may operate according to a mail information management method,
FIG. 2 is a working flow of the mail information management method according to an embodiment of the present invention, and
FIG. 3 illustrates a control scheme of the mail information management method according to an embodiment of the present invention.

### Detailed Description

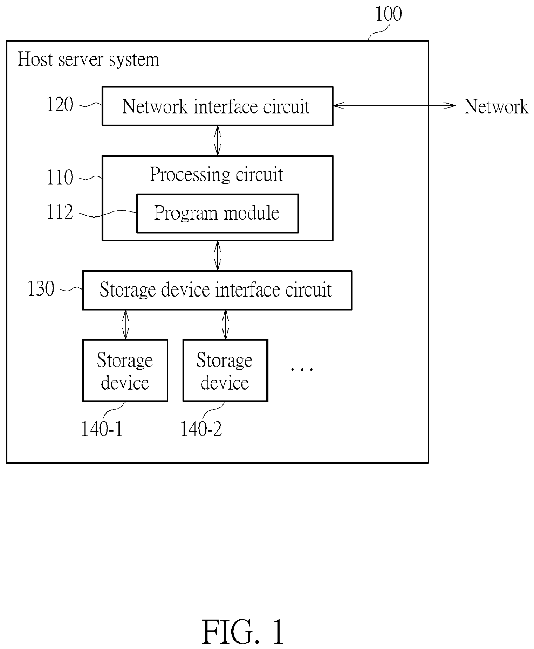

FIG. 1 is a block diagram of an apparatus for performing hybrid management on mail information according to an embodiment of the present invention, in which the apparatus may operate according to a mail information management method. The apparatus may include a host server system 100. For example, the host server system 100 may be implemented with at least one network storage server (e.g. one or more network storage servers, such as one or more network attached storage (NAS) servers), but the present invention is not limited thereto. The host server system 100 may include a processing circuit 110 (e.g. at least one processor and associated circuit such as RAM, bus, chipset, etc.), a network interface circuit 120, a storage device interface circuit 130, and one or more storage devices (e.g. one or more hard disk drives (HDDs) and/or one or more solid state drives (SSDs)) such as the storage devices 140-1, 140-2, etc. More particularly, the network interface circuit 120 is arranged to couple the host server system 100 to at least one network. The storage device interface circuit 130 is arranged to install the one or more storage devices such as the storage devices 140-1, 140-2, etc. at the host server system 100, in which the one or more storage device may be arranged to store information. The processing circuit 110 is arranged to control operations of the host server system 100 according to the mail information management method.

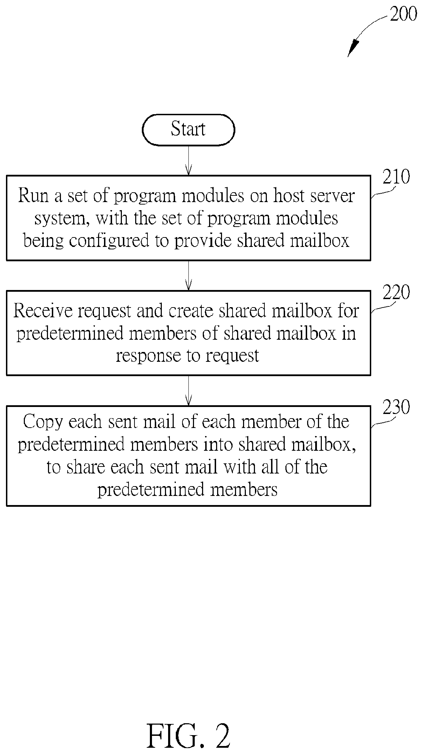

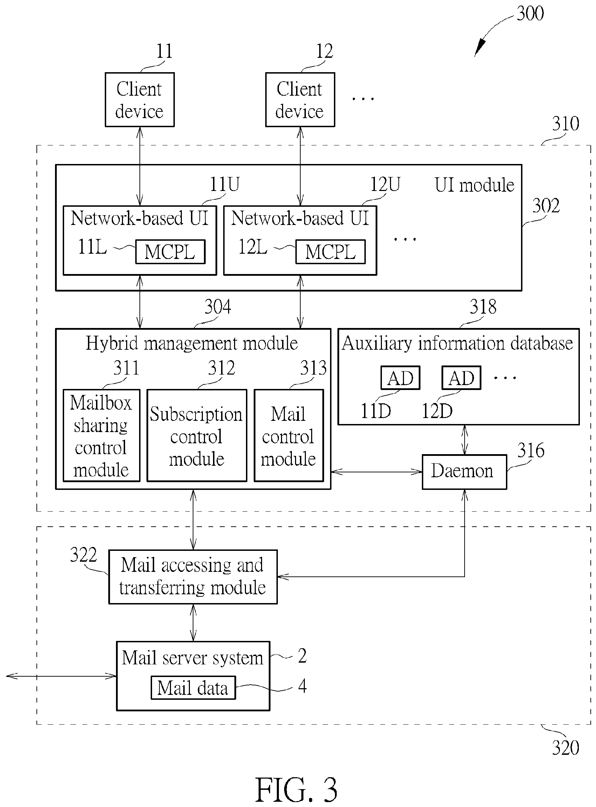

FIG. 2 is a working flow 200 of the mail information management method according to an embodiment of the present invention. The mail information management method may be applied to the aforementioned apparatus such as the host server system 100. In Step 210, the processing circuit 110 may run a set of program modules 112 on the host server system 100, with the set of program modules 112 being configured to provide a shared mailbox. For example, the processing circuit 110 running the set of program modules 112 may control the host server system 100 to operate according to the mail information management method. In Step 220, the host server system 100 may receive a request through the internet (e.g. a Hypertext Transfer Protocol (HTTP) request) and create the shared mailbox for predetermined members of the shared mailbox in response to the request, in which the predetermined members may include at least one portion (e.g. a portion or all) of a plurality of users of the host server system 100. Each of the predetermined members may be one of the users of the host server system 100. In Step 230, regarding replying to a previous mail in the shared mailbox, the host server system 100 may copy each sent mail, if any, of each member of the predetermined members into the shared mailbox, to share the aforementioned each sent mail (or the each sent mail, for brevity) with all of the predetermined members. The each sent mail may be a mail sent under the shared mailbox. For example, the each sent mail may be a reply to the previous mail in the shared mailbox, and the reply may be referred to as a reply-mail. For another example, the each sent mail may be a reply to a reply-mail in the shared mailbox. As such sent mails are copied (rather than moved) to the shared mailbox, the mail information management method and the apparatus can ensure that everybody within the subscribers of the shared mailbox sees the same thread of mails (such as that regarding a topic). Thus, the present invention can properly manage mail information. For example, it is unnecessary that mails of the same topic are sent from one person to another within the predetermined members, and all of the subscribers of the shared mailbox (e.g. the predetermined members) can easily follow the discussions of the same topic, having no need to forward mails. In addition, the mail information management method and the apparatus such as the host server system 100 can extract preview information of existing mails in the shared mailbox for a user that has not become one of the predetermined members, and save the preview information into an individual database for the user. When the user has just become a member (e.g. a subscriber) of the shared mailbox, the apparatus can provide the user with the preview information in time, to allow the user to immediately know what has been discussed (e.g. the existing mails such as that regarding the topic) in the shared mailbox. In comparison with the related art, the present invention can achieve the goal of reducing mails of the same topic and reducing the associated loading, without side effects or in a way that is less likely to introduce side effects. For better comprehension, some implementation details may be described with reference to FIG. 3, but the present invention is not limited thereto.

FIG. 3 illustrates a control scheme of the mail information management method according to an embodiment of the present invention. A communications system 300 may include a plurality of client devices (e.g. the client devices 11, 12, etc.) for accessing the host server system 100 shown in FIG. 1, and may include the host server system 100 running the set of program modules 112, for serving the plurality of client devices. Examples of the plurality of client devices may include, but are not limited to: a personal computer, a multifunctional mobile phone, and a tablet computer. The set of program modules 112 may include a user interface (UI) module 302, a hybrid management module 304, a daemon 316, a mail accessing and transferring module 322, and a mail server system 2, in which the UI module 302 may include sub-modules such as network-based UIs 11U, 12U, etc. respectively corresponding to the client devices 11, 12, etc., and the hybrid management module 304 may include sub-modules such as a mailbox sharing control module 311, a subscription control module 312, and a mail control module 313. According to this embodiment, the UI module 302, the hybrid management module 304, and the daemon 316 may be arranged to operate in a mail client layer 310 of the host server system 100, and the mail accessing and transferring module 322 and the mail server system 2 may be arranged to operate in a mail server layer 320 of the host server system 100. For example, the daemon 316 may store an auxiliary information database 318 in the one or more storage devices (e.g. the storage devices 140-1, 140-2, etc.) of the host server system 100. Under control of the hybrid management module 304, the daemon 316 may access the auxiliary information database 318, and the hybrid management module 304 (e.g. one or more sub-modules thereof) may manage individual databases in the auxiliary information database 318 for the users, such as auxiliary databases (ADs) 11D, 12D, etc. respectively corresponding to the client devices 11, 12, etc., and may manage interactions between the host server system 100 and the client devices 11, 12, etc. through the network-based UIs 11U, 12U, etc., respectively. For example, the client devices 11, 12, etc. may run browsers to execute and/or display UI contents provided by the network-based UIs 11U, 12U, etc., respectively, to allow the users (e.g. each using one of the client devices 11, 12, etc.) to interact with the host server system 100 (e.g. receive or send mails) through the client devices 11, 12, etc., respectively. In addition, the mail server system 2 may be arranged to control typical mailing functions, which may include storing mails in some sub-directories of a mail directory (e.g. an individual mailbox, or mailbox, for brevity) of a user respectively, sending a mail for the user, etc., in which mail data 4 may be raw data of the mails. For example, the mail server system 2 may store the mail data 4 in the one or more storage devices (e.g. the storage devices 140-1, 140-2, etc.) of the host server system 100.

Some operations managed by the hybrid management module 304 (e.g. the sub-modules thereof) may be described as follows. The users such as a first user, a second user, etc. may access the host server system 100 through the client devices 11, 12, etc., respectively, and the hybrid management module 304 may manage mail contact permission lists (MCPLs) 11L, 12L, etc. respectively corresponding to the client devices 11, 12, etc. for the first user, the second user, etc., respectively. The mailbox sharing control module 311 may be configured to manage the shared mailbox, and the mail accessing and transferring module 322 may be configured to access mail raw data (e.g. the mail data 4) stored in the host server system 100 under control of the mailbox sharing control module 311. When the first user asks for doing something regarding the shared mailbox through the network-based UI 11U, the mailbox sharing control module 311 may do it correspondingly. For example, the first user may ask for creating the shared mailbox and may enter the mailbox name of the shared mailbox, and may ask for sharing the shared mailbox to the second user. The mailbox sharing control module 311 controls the mail accessing and transferring module 322 to create the shared mailbox with the mailbox name under the mail directory of the first user within the mail server system 2, as a sub-directory of this mail directory, and then the mail accessing and transferring module 322 notify the daemon 316 of the completion of creating the shared mailbox. The daemon 316 may generate auxiliary information regarding the shared mailbox in the auxiliary information database 318, in which the auxiliary information may include configuration data of the shared mailbox, preview contents of the shared mailbox, etc., and the auxiliary information for the first user and the second user may be stored in the ADs 11D and 12D, respectively. For example, after the first user completes entering some fields of a mailbox-sharing list regarding the shared mailbox through the network-based UI 11U, the mailbox sharing control module 311 controls the mail accessing and transferring module 322 to create a sub-directory with the mailbox name of the shared mailbox under the mail directory of the second user, as the second-user version of the shared mailbox, for use of the second user. In addition, the mailbox sharing control module 311 triggers the mail control module 313 (e.g. a mail sending module therein) to provide the mail server system 2 with a predetermined notification mail, for making the mail server system 2 to send out the predetermined notification mail to the second user. For example, the predetermined notification mail may indicate that the shared mailbox has been created and has been shared to the second user, but the present invention is not limited thereto. The mail accessing and transferring module 322 is capable of monitoring any event in the mail server system 2 (e.g. an event of creating the shared mailbox, and an event of sharing the shared mailbox to the second user) and notifying the daemon 316 of the aforementioned any event, and the daemon 316 can update the ADs 11D and 12D correspondingly. The AD 12D may include respective index files of multiple mails in the shared mailbox and their status information (which may indicate whether these mails are read or unread by the second user, respectively), in which the respective raw data of these mails are not copied into the sub-directory under the mail directory of the second user, such as the second-user version of the shared mailbox.

According to this embodiment, the first user may be regarded as the owner of the shared mailbox, and other members of the shared mailbox may be regarded as subscribers of the shared mailbox. As the respective raw data of these mails are not copied, the storage space of the host server system 100 is not wasted. The first user can see the shared mailbox under the mail directory of the first user, and the second user can see the second-user version of the shared mailbox under the mail directory of the second user, in which the second-user version of the shared mailbox may have the same or similar appearance (e.g. the thread(s) of mails, the preview information of mails, etc.) as that of the shared mailbox under the mail directory of the first user. Therefore, the present invention can properly manage mail information to bring better user experience to users. For example, it is unnecessary that mails of the same topic are sent from one person to another within the predetermined members (e.g. the first user, the second user, etc.), and all of the subscribers of the shared mailbox (e.g. the predetermined members) can easily follow the discussions of the same topic, having no need to forward mails.

According to some embodiments, the predetermined notification mail may be replaced by multiple notification mails such as a first notification mail and a second notification mail, in which the first notification mail indicating that the shared mailbox has been created may be sent after the shared mailbox is created, and the second notification mail indicating that the shared mailbox has been shared to the second user may be sent after the shared mailbox is shared to the second user. The daemon 316 can extract the preview information of the mails in the shared mailbox for the second user in advance, for example, before the second user become one of the subscribers. The daemon 316 can save the preview information of the mails in the shared mailbox into the individual database for the second user (e.g. the AD 12D). When the second user has just become a member (e.g. a subscriber) of the shared mailbox, the network-based UI 12U can provide the second user with the preview information in time, to allow the second user to immediately know what has been discussed (e.g. the existing mails such as that regarding the topic) in the shared mailbox. In comparison with the related art, the present invention can achieve the goal of reducing mails of the same topic and reducing the associated loading, without side effects or in a way that is less likely to introduce side effects.

According to some embodiments, the first notification mail may provide a hint message to guide the second user to subscribe the shared mailbox. When the second user subscribes the shared mailbox through the network-based UI 12U, the subscription control module 312 sends a command to the mail accessing and transferring module 322, for indicating the subscription action (e.g. subscribing the shared mailbox) performed by the second user, and the mail accessing and transferring module 322 can notify the daemon 316 of an subscription event such as the event of the subscription action. When detecting the subscription event, the daemon 316 updates the AD 12D correspondingly, for example, by setting a subscription indicator in the AD 12D for the second user. The subscription indicator may indicate that the second user has subscribed the shared mailbox. According to the subscription indicator indicating that the second user has subscribed the shared mailbox, the network-based UI 12U can provide the second user with the preview information. As the preview information of the shared mailbox has been prepared in advance for the second user, the network-based UI 12U can provide the second user with the preview information in time, to allow the second user to immediately know what has been discussed (e.g. the existing mails such as that regarding the topic) in the shared mailbox.

According to some embodiments, examples of the aforementioned any event monitored by the mail accessing and transferring module 322 may include, but are not limited to: an owner-mail event such as an event that a mail originally stored in a certain sub-directory of the mail directory of the owner (e.g. an inbox sub-directory such as "Inbox" under the mail directory of the first user) is moved into the shared mailbox. For example, the first user has just asked for moving this mail (e.g. an incoming mail in the inbox sub-directory such as "Inbox" under the mail directory of the first user) to the shared mailbox, and the mail control module 313 (e.g. a mail module therein) may send one or more commands toward the mail accessing and transferring module 322, for triggering the mail accessing and transferring module 322 to control the mail server system 2 to move this mail to the shared mailbox. As a result, the mail accessing and transferring module 322 notifies the daemon 316 of the owner-mail event, and the daemon 316 updates the ADs 11D, 12D, etc. (e.g. the preview information regarding this mail) correspondingly, to make the ADs 11D, 12D, etc. correspond to the moving operation, but the present invention is not limited thereto. In some embodiments, the preview information regarding this mail may include mail contents of this mail, without any attached file.

According to some embodiments, examples of the aforementioned any event monitored by the mail accessing and transferring module 322 may include, but are not limited to: a reply event such as an event that a mail in the shared mailbox is replied. The reply event may occur due to the owner of the shared mailbox, such as the first user. Assume that the first user determines to reply the moved mail under the shared mailbox (i.e. the mail moved to the shared mailbox) with another mail such as a first reply-mail. For example, the first user has just entered mail contents of the first reply-mail and asked for replying the moved mail with the first reply-mail through the network-based UI 11U, and the mail control module 313 (e.g. the mail module therein) may send a set of commands toward the mail accessing and transferring module 322, for triggering the mail accessing and transferring module 322 to control the mail server system 2 to reply the moved mail with the first reply-mail, save the first reply-mail in a sent sub-directory such as "Sent" under the mail directory of the first user, and copy the first reply-mail into the shared mailbox, in which the operation of copying the first reply-mail into the shared mailbox may be taken as an example of the operation of Step 230, and the moved mail may be taken as an example of the previous mail. As a result, the mail accessing and transferring module 322 notifies the daemon 316 of the reply event, and the daemon 316 updates the ADs 11D, 12D, etc. (e.g. the preview information regarding the first reply-mail) correspondingly, to make the ADs 11D, 12D, etc. correspond to the copying operations. Thus, the first reply-mail appears in the sent sub-directory such as "Sent" under the mail directory of the first user, and also appears in the shared mailbox. In some embodiments, a mail (e.g. the first reply-mail) of a member (e.g. the first user) of the predetermined members is sent from the member and is copied into the shared mailbox, and the host server system 100 (e.g. the hybrid management module 304) keeps the mail of the member in the sent items category (e.g. "Sent") of the mailbox of the member unless the member deletes the mail, in which the sent items category is arranged to store sent items from the member. When the member deletes the mail, the host server system removes the mail from the sent items category without removing a copied version of the mail (e.g. the copied version of the first reply-mail, in the shared mailbox) from the shared mailbox. As a result, the host server system 100 (e.g. the hybrid management module 304) can keep the thread(s) of mails in the shared mailbox for all of the predetermined members. More particularly, the host server system 100 (e.g. the hybrid management module 304) can control the shared mailbox to have the same set of threads for each of the predetermined members, and can control the shared mailbox to list the each sent mail within the same set of threads, for all of the members of the shared mailbox to easily read and understand what has been discussed in the shared mailbox.

Please note that the hybrid management module 304 (e.g. one or more of the sub-modules thereof, such as the mail control module 313) may control one or more attributes (e.g. read-only (R/O) or readable-writable (R/W)) of the first reply-mail, in which a command of the set of commands may be arranged to control the one or more attributes. For example, according to the command, the mail control module 313 may control the first reply-mail to be R/O. For another example, according to the command, the mail control module 313 may control the first reply-mail to be R/W. In some embodiments, the hybrid management module 304 (e.g. the mail control module 313) may control the one or more attributes (e.g. R/O or R/W) of one or more reply-mails in the shared mailbox according to one or more predetermined settings, such as default settings or user settings of the owner of the shared mailbox.

According to some embodiments, the reply event may occur due to a subscriber of the shared mailbox, such as the second user. Assume that the second user determines to reply the first reply-mail under the shared mailbox with yet another mail such as a second reply-mail. For example, the second user has just entered mail contents of the second reply-mail and asked for replying the first reply-mail with the second reply-mail through the network-based UI 12U, and the mail control module 313 (e.g. the mail module therein) may send another set of commands toward the mail accessing and transferring module 322, for triggering the mail accessing and transferring module 322 to control the mail server system 2 to reply the first reply-mail with the second reply-mail, save the second reply-mail in a sent sub-directory such as "Sent" under the mail directory of the second user, and copy the second reply-mail into the shared mailbox, in which the operation of copying the second reply-mail into the shared mailbox may be taken as another example of the operation of Step 230, and the first reply-mail may be taken as another example of the previous mail. As a result, the mail accessing and transferring module 322 notifies the daemon 316 of the reply event, and the daemon 316 updates the ADs 11D, 12D, etc. (e.g. the preview information regarding the second reply-mail) correspondingly, to make the ADs 11D, 12D, etc. correspond to the copying operations. Thus, the second reply-mail appears in the sent sub-directory such as "Sent" under the mail directory of the second user, and also appears in the shared mailbox.

According to some embodiments, when a user (e.g. the first user, the second user, etc.) replies a mail under a normal sub-directory (e.g. "Inbox") of the mail directory of the user, the hybrid management module 304 (e.g. the mail control module 313) may prevent recognizing such action as the reply event, in which the normal sub-directory is a non-shared mailbox (which is not a shared mailbox such as that mentioned above). For brevity, similar descriptions are not repeated in detail here.

## Claims

1. A mail information management method, **characterized in that** the method comprises:
running a set of program modules (112) on a host server system (100), the set of program modules (112) being configured to provide a shared mailbox;
receiving a request and creating the shared mailbox for predetermined members of the shared mailbox in response to the request, wherein the predetermined members comprise at least one portion of a plurality of users of the host server system (100); and
regarding replying to a previous mail in the shared mailbox, copying each sent mail, if any, of each member of the predetermined members into the shared mailbox, to share the each sent mail with all of the predetermined members.

2. The method of claim 1, **characterized in that** the set of program modules (112) comprises a mailbox sharing control module and a mail accessing and transferring module, the mailbox sharing control module is configured to manage the shared mailbox, and the mail accessing and transferring module is configured to access mail raw data stored in the host server system (100) under control of the mailbox sharing control module.

3. The method of claim 1, **characterized in that** a mail of a member of the predetermined members is sent from the member and is copied into the shared mailbox; and the method further comprises:
keeping the mail of the member in a sent items category of a mailbox of the member unless the member deletes the mail, wherein the sent items category is arranged to store sent items from the member.

4. The method of claim 3, **characterized in that** the method further comprises:
when the member deletes the mail, removing the mail from the sent items category without removing a copied version of the mail from the shared mailbox.

5. The method of claim 1, **characterized in that** the method further comprises:
controlling the shared mailbox to have a same set of threads for each of the predetermined members.

6. The method of claim 5, **characterized in that** the method further comprises:
controlling the shared mailbox to list the each sent mail within the same set of threads.

7. A host server system (100), **characterized in that** the host server system (100) comprises:
a network interface circuit (120), arranged to couple the host server system (100) to at least one network;
a storage device interface circuit (130), arranged to install at least one storage device (140) for storing information; and
a processing circuit (110), coupled to the network interface circuit and the storage device interface circuit (130), arranged to control operations of the host server system (100), the operations comprising:
running a set of program modules (112) on the host server system (100), the set of program modules (112) being configured to provide a shared mailbox;
receiving a request and creating the shared mailbox for predetermined members of the shared mailbox in response to the request, wherein the predetermined members comprise at least one portion of a plurality of users of the host server system (100); and
regarding replying to a previous mail in the shared mailbox, copying each sent mail, if any, of each member of the predetermined members into the shared mailbox, to share the each sent mail with all of the predetermined members.

8. The host server system (100) of claim 7, **characterized in that** the set of program modules (112) comprises a mailbox sharing control module and a mail accessing and transferring module, the mailbox sharing control module is configured to manage the shared mailbox, and the mail accessing and transferring module is configured to access mail raw data stored in the host server system (100) under control of the mailbox sharing control module.

9. The host server system (100) of claim 7, **characterized in that** a mail of a member of the predetermined members is sent from the member and is copied into the shared mailbox; and the host server system (100) keeps the mail of the member in a sent items category of a mailbox of the member unless the member deletes the mail, wherein the sent items category is arranged to store sent items from the member.

10. The host server system (100) of claim 9, **characterized in that** when the member deletes the mail, the host server system (100) removes the mail from the sent items category without removing a copied version of the mail from the shared mailbox.

11. The host server system (100) of claim 7, **characterized in that** the host server system (100) controls the shared mailbox to have a same set of threads for each of the predetermined members.

12. The host server system (100) of claim 11, **characterized in that** the host server system (100) controls the shared mailbox to list the each sent mail within the same set of threads.

13. The method of claim 2 or the host server system (100) of claim 11, **characterized in that** the mailbox sharing control module and the mail accessing and transferring module operate in a mail client layer and a mail server layer of the host server system (100), respectively.

14. The method of claim 1 or the host server system (100) of claim 7, **characterized in that** each of the predetermined members is one of the users of the host server system (100).

15. The method of claim 1 or the host server system (100) of claim 7, **characterized in that** the each sent mail is a reply to the previous mail in the shared mailbox.
